# EUROPÄISCHE PATENTSCHRIFT

(11) **EP 0 869 301 B1**
(45) Veröffentlichungstag und Bekanntmachung des Hinweises auf die Patenterteilung: **15.05.2002**
(21) Anmeldenummer: 98104369.8
(22) Anmeldetag: 11.03.1998
(51) Int. Cl.: F16H 63/14

(54) **Schaltvorrichtung für ein sequentiell betätigtes Getriebe**
Shift selector for sequentially actuated transmission
Dispositif de commande de vitesses pour boîte séquentielle

(30) Priorität: 04.04.1997 DE 19713749
(43) Veröffentlichungstag der Anmeldung: 07.10.1998
(73) Patentinhaber: Dr.Ing.h.c. F. Porsche Aktiengesellschaft, 70435 Stuttgart (DE)
(72) Erfinder: Knoblauch, Richard, 71287 Weissach (DE)

(56) Entgegenhaltungen:
- DE-C- 907 249
- FR-A- 813 395
- FR-A- 2 714 952
- US-A- 3 954 021
- US-A- 4 106 362

## Beschreibung

Die Erfindung betrifft eine Schaltvorrichtung für ein sequentiell betätigtes Getriebe nach dem Oberbegriff des Patentanspruches 1, wie sie beispielsweise schon aus der DE 907 249 bekannt und allgemein im Motorradbau üblich sind. Ebenso werden diese Getriebe zunehmend auch in Kraftwagen eingesetzt. Bei prinzipiell ähnlichem Aufbau stellt sich bei Kraftwagen gegenüber Motorrädern das Problem, daß eine Schalt- oder Betätigungsvorrichtung in der Regel nicht unmittelbar am Getriebe angeordnet werden kann. Bei diesen bekannten sequentiell betätigten Getrieben ist es üblich, bei Betätigung des Hebels in einer Richtung die Gänge der nächsthöheren Geschwindigkeit des Fahrzeuges zu schalten, während bei Betätigung in der anderen Richtung von der Ursprungsstellung aus die Getriebegänge für die nächst niedrigeren Geschwindigkeiten geschaltet werden.

Es ist die Aufgabe der Erfindung, eine Schaltvorrichtung für ein sequentiell betätigtes Getriebe zu schaffen, die in besonderer Weise zum Einbau in Kraftwagen geeignet ist.

Erfindungsgemäß wird diese Aufgabe mit den Merkmalen des Patentanspruches 1 gelöst. Es wird vorgeschlagen, eine zur Betätigung eines Schaltsteuerelementes verwendten Betätigungshebel linear zu führen. Mit dieser linearen Führung ist die erfindungsgemäß ausgebildete Schaltvorrichtung für den Einsatz in Kraftwagen in besonderer Weise geeignet, da aufgrund der in Kraftwagen herrschenden räumlichen Distanz zwischen einer Betätigungseinrichtung und dem Getriebe eine Übertragung von Schaltbewegungen durch lineare Bewegungen einfacher zu realisieren ist. So wird vorgeschlagen, die Schaltvorrichtung über ein Übertragungsmittel (Gestänge, Bowdenzug oder ähnliches) mit einem vom Fahrer bedienbaren Betätigungsmittel (Schalthebel) zu verbinden und das Betätigungsmittel ebenfalls linear bewegbar zu halten. Durch die nunmehr durchgängig lineare Lagerung auf dem gesamten Wege der Übertragung des Schaltbefehles ist es nicht mehr notwendig, Getriebe zur Umsetzung einer rotierenden Bewegung in eine lineare Bewegung vorzusehen, so daß der Bauaufwand merklich vermindert ist.

Die Unteransprüche enthalten vorteilhafte Weiterbildungen der Erfindung.

Die weiteren Ausbildungen der Erfindung betreffen eine Sperreinrichtung zur Sperrung einer Schaltposition im Getriebe, besonders eine Rückwärtsgangsperre. Mit einer derartigen Sperre ist sichergestellt, daß der Fahrer, der bei einem sequentiell betätigten Getriebe aus der Position des Betätigungsmittels nicht mehr auf die Schaltstellung des Getriebes schließen kann, nicht versehentlich beim Durchschalten des Getriebes in den Rückwärtsgang schaltet. Eine solche Sperreinrichtung soll das Einlegen des gesperrten Ganges verhindern, jedoch das Herausschalten aus dem gesperrten Gang ermöglichen. Bei Motorrädern, die üblicherweise keinen Rückwärtsgang aufweisen, ist eine derartige Sperreinrichtung nicht notwendig.

Für eine solche Sperreinrichtung wird vorgeschlagen, diese Sperreinrichtung unmittelbar an dem Betätigungshebel zur Betätigung des Schaltsteuerelementes anzuordnen. Mit dieser Anordnung ist die Sperreinrichtung zusammen mit dem Betätigungshebel mit dem Übertragungsmittel, über das auch eine Entsperrbewegung des Sperrmittels eingeleitet wird, verbunden. Folglich sind keine besonderen Entkoppelglieder zwischen dem Übertragungsmittel und der Sperreinrichtung zur Entkoppelung von Schaltbewegung und Entsperrbewegung des Übertragungsmittels notwendig. Darüber hinaus baut die vorgeschlagene Anordnung besonders klein und weist eine besonders geringe Zahl von benötigten Bauteilen auf.

In Weiterbildung dieser Sperreinrichtung wird vorgeschlagen, an der Sperreinrichtung einen Sperrfinger vorzusehen, der mit einem am Umfang des Schaltsteuerelementes vorgesehenen Absatz korrespondiert. Hierbei ist der Absatz auf einem anderen Durchmesser des Schaltsteuerelementes angeordnet als der Angriffspunkt des Betätigungshebels auf dem Schaltsteuerelement. Insbesondere ist der Durchmesser, auf dem der Absatz angeordnet ist, größer gewählt als der Durchmesser, auf dem der Angriffspunkt des Betätigungshebels angeordnet ist. Durch diese Maßnahme ist es in Verbindung mit der Koppelung von Sperreinrichtung und Betätigungshebel möglich, die Schaltbewegung mit einem Absatz, der nur eine einzige Wirkfläche aufweist, wirksam einer Drehrichtung zu blockieren.

Weiterhin wird vorgeschlagen, am Umfange des Schaltsteuerelementes eine Rampe vorzusehen, die sich an den Absatz anschließt. Diese Rampe steigt zum Absatz hin und in Bewegungsrichtung des Schaltsteuerelementes aus der gesperrten Position heraus an. Durch die vorgeschlagene Kombination von Rampe und Absatz ist in der einen Schaltrichtung des Schaltsteuerelementes, nämlich zur gesperrten Position hin, die Schaltbewegung durch das Zusammenwirken des Sperrfingers mit dem Absatz gesperrt. In der entgegengesetzten Schaltrichtung hingegen wirkt der Schaltfinger mit der Rampe zusammen, so daß bei einer Bewegung des Schaltsteuerelementes der Sperrfinger durch die Rampe aus seiner Sperrposition hinaus angehoben wird und damit eine Schaltbewegung möglich ist.

Es wird ferner vorgeschlagen, den Sperrfinger als Teil eines Winkelhebels auszubilden und diesen Winkelhebel an dem Betätigungshebel schwenkbar zu halten. Auf das dem Sperrfinger gegenüberliegende Ende des Winkelhebels wirkt ein Übertragungselement ein, das mit dem Übertragungsmittel fest verbunden ist. Der Betätigungshebel hingegen ist auf dem Übertragungsmittel schwenkbar gelagert und Längsbewegungen des Übertragungsmittels werden durch das Übertragungselement auf den Betätigungshebel übertragen. Hierzu liegt der Betätigungshebel an zumindest einer Stirnfläche des Übertragungselementes an; vorzugsweise umgreift der Betätigungshebel beidseitig das Übertragungselement.

Schließlich wird vorgeschlagen, das Übertragungselement und den Winkelhebel so anzuordnen und miteinander zu koppeln, daß für eine Bewegung des Sperrfingers in seine entsperrte Position eine Drehbewegung des Übertragungselementes in der Richtung erforderlich ist, mit der ein Anliegen der Ratsche am Schaltsteuerelement bewirkt wird. Durch diese Maßnahme wird ausgeschlossen, daß auch unter ungünstigen Umständen der Betätigungshebel beim Entsperren der Sperreinrichtung vom Schaltsteuerelement abhebt.

Allgemein wird noch vorgeschlagen, das Übertragungsmittel als Gestänge auszubilden. Da mit einem Gestänge sowohl Längs- wie auch Drehbewegungen übertragbar sind, ist auf diese Weise das Übertragungsmittel besonders einfach und bedienungssicher ausgeführt.

Die Erfindung ist nachstehend anhand des in den Figuren dargestellten Ausführungsbeispieles näher erläutert. Es zeigen
- Fig. 1: eine Ansicht von schräg oben auf eine Schaltvorrichtung für ein sequentiell betätigtes Getriebe und
- Fig. 2: eine Ansicht von schräg unten auf dieselbe Schaltvorrichtung.

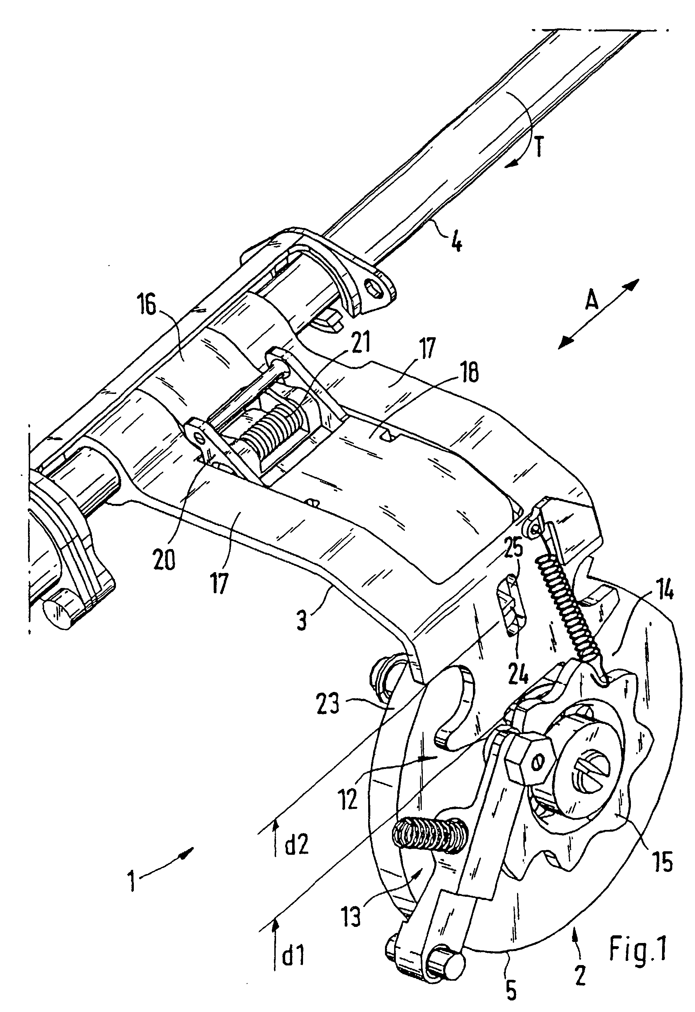

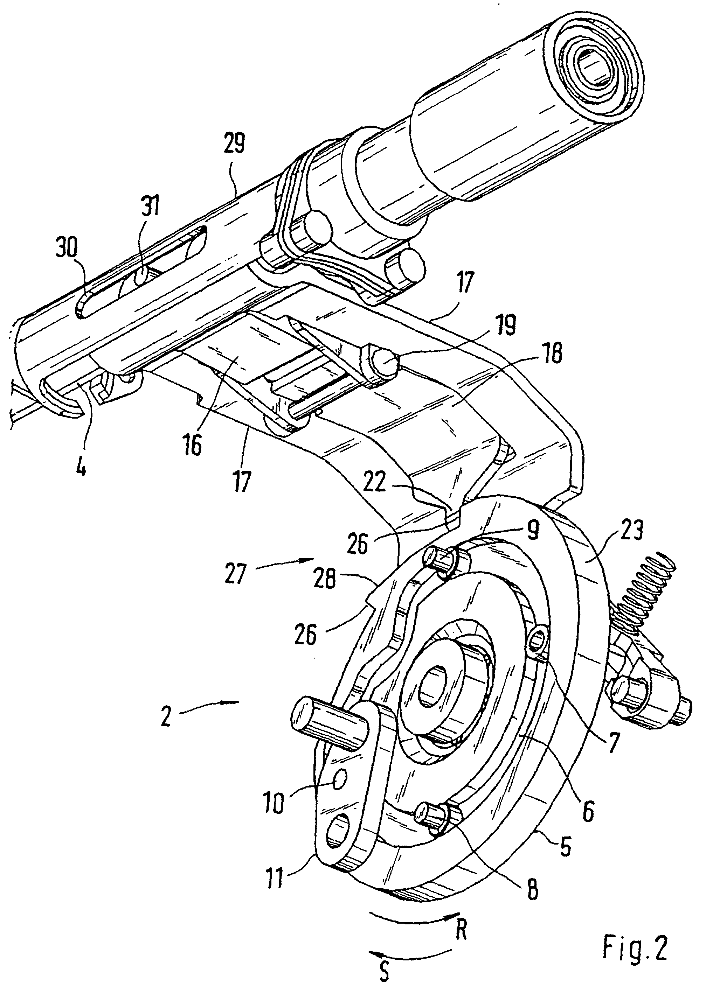

Eine in Fig. 1 dargestellte Schaltvorrichtung 1 dient zur sequentiellen Betätigung eines nicht dargestellten Getriebes. Die Schaltvorrichtung 1 besteht aus einem Schaltsteuerelement 2, einem Betätigungshebel 3 und einem als Übertragungsmittel zu einem nicht dargestellten Schalthebel wirkenden Schaltgestänge 4. Die Schaltsteuereinrichtung 2 besteht ihrerseits aus einer Steuerscheibe 5, in die rückseits eine Steuernut 6 (siehe Fig. 2) eingearbeitet ist. In der Steuernut 6 sind Steuerstifte 7 bis 10 geführt, die über Umlenkhebel auf nicht dargestellte Schaltstangen zum Einlegen der Gänge des ebenfalls nicht dargestellten Getriebes einwirken. Beispielhaft ist ein Umlenkhebel 11 für den Rückwärtsgang dargestellt.

Neben der Steuerscheibe 5 weist die Schaltsteuereinrichtung 2 ein von dem Betätigungshebel 3 betätigtes Schrittschaltwerk 12 sowie eine Rastvorrichtung 13 auf. Die Rastvorrichtung 13 hält die Steuerscheibe 5 federbelastet in vorbestimmten (Schalt-)Positionen fest. Der Betätigungshebel 3 ist durch eine Feder 14 belastet und läuft auf dem Schrittschaltwerk 12. Zur Betätigung der Schaltsteuereinrichtung 2 wird der Betätigungshebel 3 in Pfeilrichtung A bewegt un das Schrittschaltwerk 12 um einen Schritt weitergeschaltet. Mit jeder Schaltbewegung wird die Steuerscheibe 5 um eine Raste 15 der Rasteinrichtung 13 weiterbewegt.

Auf dem Schaltgestänge 4 ist ein Übertragungselement 16 in Dreh- und Längsrichtung fest angeordnet. Zwei Enden 17 des Betätigungshebels 3 umgreifen das Übertragungselement 16 gabelförmig und sind auf dem Schaltgestänge 4 drehbeweglich gelagert. Somit werden Längsbewegungen des Schaltgestänges 4 in Pfeilrichtung A, nicht jedoch Drehbewegungen des Schaltgestänges 4 durch das Übertragungselement 16 auf den Betätigungshebel 3 übertragen.

In einer zwischen den beiden Enden 17 gebildeten Aussparung in der Ratsche 3 ist ein Winkelhebel 18 auf einer am Betätigungshebel 3 angeordneten Achse 19 schwenkbar gehalten. Ein erstes Ende 20 des Winkelhebels 18 ist mit dem Übertragungselement 16 in der Weise gekoppelt, daß eine Drehbewegung des Schaltgestänges 4 und damit des Übertragungselementes 16 zu einer Schwenkbewegung des Winkelhebels 18 führt. Eine an der Koppelstelle angeordnete Feder 21 sorgt dafür, daß das erste Ende 20 des Winkelhebels 18 stets am Übertragungselement 16 anliegt.

Das zweite Ende des Winkelhebels 18 ist als Sperrfinger 22 ausgebildet, der auf einer Umfangsbahn 23 der Steuerscheibe 5 läuft. Ein abgewinkelter Teil 24 des Sperrfingers 22 ist in einer Nut 25 des Betätigungshebels 3 geführt.

An der Umfangsbahn 23 sind Absätze 26 vorgesehen, die zusammen mit dem Sperrfinger 22 eine Sperreinrichtung 27 bilden. Die Absätze 26 sind an der Steuerscheibe 5 auf einem Durchmesser d2 angeordnet. Der Betätigungshebel 3 greift auf einem Durchmesser d1 am Schrittschaltwerk 12 an, wobei der Durchmesser d1 deutlich kleiner als der Durchmesser d2 gewählt ist. Dies hat zur Folge, daß in einer gesperrten Drehrichtung R sich sowohl der Sperrfinger 22 wie auch der Betätigungshebel 3 in Eingriff mit der Steuerscheibe 5 befinden. Da die Punkte, an denen der Sperrfinger 22 und der Betätigungshebel 3a angreifen, bezogen auf die Drehbewegung der Steuerscheibe 5 auf Kreisbahnen unterschiedlichen Durchmesser liegen, andererseits aber durch die Koppelung von Sperrfinger 22 und Betätigungshebel 3 diese Elemente keine unterschiedlichen Wege zurücklegen können, ist eine Drehbewegung der Steuerscheibe 5 nicht möglich. Da der abgewinkelte Teil 24 des Sperrfingers 22 in der Nut 25 des Betätigungshebels 3 geführt ist, ist der Sperrfinger 22 am Betätigungshebel 3 abgestützt und auch eine gewaltsame Betätigung des Schaltgestänges 4 führt nicht zu einer Schaltbewegung. Die Sperreinrichtung 27 verhindert also, daß die Steuerscheibe 5 in bestimmte Positionen, besonders in die Schaltposition für den Rückwärtsgang bewegt wird. Infolge dessen ist, solange der Sperrfinger 22 an einem der Absätze 26 anliegt, eine weitere Bewegung der Steuerscheibe 5 in der Drehrichtung R nicht möglich. In der Drehrichtung S hingegen ist die Steuerscheibe 5 weiterhin bewegbar, da eine auf der Umfangsbahn 23 ausgebildete Rampe 28 den Sperrfinger 22 über den nächsten Absatz 26 hinweghebt und so in Drehrichtung S für eine Entsperrung der Sperreinrichtung 27 sorgt.

Für eine Entsperrung der Sperreinrichtung 27 in Drehrichtung R ist es erforderlich, das Schaltgestänge 14 in Schwenkrichtung T zu verschwenken. Eine solche Schwenkbewegung wird vom Übertragungselement 16 auf den Winkelhebel 18 übertragen und der Sperrfinger 22 hebt von der Umfangsbahn 23 soweit ab, daß der Absatz 26 freigegeben und eine weitere Bewegung der Steuerscheibe 5 in Drehrichtung R durch Längsbewegung des Schaltgestänges 4 möglich ist. Die Schwenkrichtung T ist hierbei so gewählt, daß durch eine solche Schwenkbewegung der Übertragungshebel 3 in Zugrichtung der Feder 14 in Richtung seines Eingriffes in das Schrittschaltwerk 12 bewegt wird.

Das Schaltgestänge 4 ist in einer Führungseinrichtung 29 geführt, die auch nicht näher gezeigte Einrichtungen für eine federbelastete Zentrierung des Schaltgestänges 4 in Längs- wie auch in Drehrichtung enthält. In der Führungseinrichtung 29 ist eine Aussparung 30 vorgesehen, in die ein Zapfen 31 des Übertragungselementes 16 eingreift. Der Zapfen 30 ist hierbei so ausgebildet, daß Bewegungen des Übertragungselementes 16, die über die Bewegungen hinausgehen, die zur Betätigung der Schaltsteuereinrichtung 2 und zum Entsperren der Sperreinrichtung 27 notwendig sind, durch ein Anschlagen des Zapfens 31 an die Aussparung 30 verhindert werden.

## Patentansprüche

1. Schaltvorrichtung für ein sequentiell betätigtes Getriebe, wobei Schaltelemente des Getriebes von einem Schaltsteuerelement (2) betätigt werden und das Schaltsteuerlelement mittles eines Betätigungshebels (3) angetrieben ist, wobei bei Betätigung des Betätigungshebels in einer Richtung die Gänge der nächst höheren Geschwindigkeit und bei Betätigung des Betätigungshebels in die andere Richtung die Gänge für die nächst niedrigeren Geschwindigkeiten geschaltet werden, **dadurch gekennzeichnet, daß** der Betätigungshebel (3) längs verschiebbar geführt ist und wobei die Schaltvorrichtung über ein Übertragungsmittel (4) mit dem vom Fahrer bedienbaren Betätigungsmittel verbunden ist.

2. Schaltvorrichtung nach Anspruch 1, **dadurch gekennzeichnet, daß** zur Sperrung einer Schaltposition eine Sperreinrichtung (27) vorgesehen ist und die Sperreinrichtung an dem Betätigungshebel (3) gehalten ist.

3. Schaltvorrichtung nach Anspruch 2, **dadurch gekennzeichnet, daß** die Sperreinrichtung (27) einen Sperrfinger (22) aufweist, und daß korrespondierend zum Sperrfinger am Umfang des Schaltsteuerelementes (5) zumindest ein Absatz (26) in Umfangsrichtung vorgesehen ist.

4. Schaltvorrichtung nach Anspruch 3, **dadurch gekennzeichnet, daß** am Umfang des Schaltsteuerelementes (5) anschließend an den Absatz (26) eine Rampe (28) vorgesehen ist, wobei die Rampe zum Absatz hin und in Bewegungsrichtung (5) des Schaltsteuerelementes aus dergesperrten Position heraus ansteigt.

5. Schaltvorrichtung nach Anspruch 2,3 oder 4, **dadurch gekennzeichnet, daß** der Sperrfinger (22) als Teil eines Winkelhebels (18) ausgebildet ist und der Winkelhebel an dem Betätigungshebel (3) schwenkbar gehalten ist.

6. Schaltvorrichtung nach Anspruch 5, **dadurch gekennzeichnet, daß** der Winkelhebel (18) mit einem Übertragungselement (16) gekoppelt ist, das seinerseits mit dem Übertragungsmittel (4) fest verbunden ist, wobei eine Schwenkrichtung (T) zum Entsperren der Sperreinrichtung (27) so gewählt ist, daß sie mit einer Schwenkrichtung des Betätigungshebels (3) in Richtung des Schaltsteuerelementes (5) übereinstimmt.

7. Schaltvorrichtung nach einem der vorstehenden Ansprüche, **dadurch gekennzeichnet, daß** das Übertragungsmittel (4) als Gestänge ausgebildet ist.

## Claims

1. A gear-shift device for a sequentially operated gearbox, wherein gear-shift members of the gearbox are actuated by a gear-shift control member (2) and the gear-shift control member is driven by means of an actuating lever (3), wherein the gears of the next higher speed are shifted when the actuating lever is actuated in one direction and the gears for the next lower speeds are shifted when the actuating lever is actuated in the other direction, **characterized in that** the actuating lever (3) is guided so as to be longitudinally displaceable and wherein the gear-shift device is connected by way of a transmission means (4) to the actuating means operable by the driver.

2. A gear-shift device according to Claim 1, **characterized in that** a locking device (27) is provided in order to lock a gear-shift position and the locking device is held on the actuating lever (3).

3. A gear-shift device according to Claim 2, **characterized in that** the locking device (27) has a locking finger (22), and at least one offset (26) is provided in the peripheral direction to correspond to the locking finger on the periphery of the gear-shift control member (5).

4. A gear-shift device according to Claim 3, **characterized in that** a ramp (28) is provided adjoining the offset (26) on the periphery of the gear-shift control member (5), wherein the ramp ascends towards the offset and in the direction (5) of movement of the gear-shift control member out of the locked position.

5. A gear-shift device according to Claim 2, 3 or 4, **characterized in that** the locking finger (22) is constructed as part of an angle lever (18), and the angle lever is held on the actuating lever (3) so as to be pivotable.

6. A gear-shift device according to Claim 5, **characterized in that** the angle lever (18) is coupled to a transmission member (16) rigidly connected in turn to the transmission member (4), wherein a pivoting direction (T) for unlocking the locking device (27) is selected in such a way that it corresponds to a pivoting direction of the actuating lever (3) in the direction of the gear-shift control member (5).

7. A gear-shift device according to one of the preceding Claims, **characterized in that** the transmission member (4) is constructed in the form of a linkage.

## Revendications

1. Dispositif de changement de vitesse actionné de manière séquentielle, dans lequel des éléments de changement de vitesse de la boîte de vitesses sont actionnés par un élément de commande (2) et l'élément de commande est entraîné au moyen d'un levier d'actionnement (3), dans lequel lorsque le levier d'actionnement est actionné dans un sens, on enclenche les rapports de la vitesse immédiatement supérieure et lorsque le levier d'actionnement est actionné dans l'autre sens, on enclenche les rapports des vitesses immédiatement inférieures, **caractérisé en ce que** le levier d'actionnement (3) est guidé de manière à pouvoir coulisser longitudinalement et le dispositif de changement de vitesse est relié, par un moyen de transmission (4), au moyen d'actionnement qui peut être manoeuvré par le conducteur.

2. Dispositif de changement de vitesse selon la revendication 1, **caractérisé en ce que** pour bloquer une position de changement de vitesse il est prévu un dispositif de blocage (27) et le dispositif de blocage est fixé au levier d'actionnement 3.

3. Dispositif de changement de vitesse selon la revendication 2, **caractérisé en ce que** le dispositif de blocage (27) comporte un doigt de blocage (22), et **en ce qu'**il est prévu au moins un retrait (26) dans la direction périphérique, qui correspond au doigt de blocage sur le pourtour de l'élément de commande (5).

4. Dispositif de changement de vitesse selon la revendication 3, **caractérisé en ce que** sur le pourtour de l'élément de commande (5) il est prévu une rampe (28), à la suite du gradin (26), la rampe montant en direction du gradin et dans le sens de déplacement (5) de l'élément de commande, à partir de la position bloquée.

5. Dispositif de changement de vitesse selon la revendication 2, 3 ou 4, **caractérisé en ce que** le doigt de blocage (22) fait partie d'un levier coudé (18) et le levier coudé est fixé de manière à pouvoir pivoter sur le levier d'actionnement (3).

6. Dispositif de changement de vitesse selon la revendication 5, **caractérisé en ce que** le levier coudé (18) est accouplé à un élément de transmission (16) qui est relié fixement de son côté au moyen de transmission (4), un sens de pivotement (T) étant choisi pour le déverrouillage du dispositif de blocage (27), de manière qu'il coïncide avec un sens de pivotement du levier d'actionnement (3), dans la direction de l'élément de commande (5).

7. Dispositif de changement de vitesse selon l'une des revendications précédentes, **caractérisé en ce que** l'élément de transmission (4) est réalisé sous la forme d'une tringlerie.
